# FASCICULE DE BREVET EUROPEEN

(11) **EP 1 250 833 B1**
(45) Date de publication et mention de la délivrance du brevet: **01.03.2006**
(21) Numéro de dépôt: 02360115.6
(22) Date de dépôt: 02.04.2002
(51) Int. Cl.: A01D 57/00

(54) **Faucheuse agricole comportant un mécanisme de regroupement d'andains**
Mäher mit Schwadgruppierungmechanismus
Mower with windrow regrouping mechanism

(30) Priorité: 18.04.2001 FR 0105265
(43) Date de publication de la demande: 23.10.2002
(73) Titulaire: KUHN S.A., 67706 Saverne Cedex (FR)
(72) Inventeur: Walch, Martin, 67490 Dettwiller (FR); Wattron, Bernard, 67700 Haegen (FR)

(56) Documents cités:
- CA-A- 1 248 763
- FR-A- 2 559 344
- GB-A- 1 541 971
- GB-A- 2 094 606
- US-A- 2 666 518
- US-A- 4 627 226

## Description

La présente invention se rapporte au domaine technique général du machinisme agricole. Elle concerne plus particulièrement une faucheuse comportant :
- un châssis,
- un mécanisme de coupe supporté par ledit châssis, et
- un mécanisme de regroupement d'andains comportant un dispositif de convoyage longitudinal et un dispositif de convoyage transversal.

Une telle faucheuse est connue dans l'état de la technique. En effet, le prospectus **"KMT/KMR 2400-3000-3200"** de la société **VICON** décrit une faucheuse conditionneuse traînée équipée d'un groupeur à tapis. D'une manière connue de l'homme de l'art, cette faucheuse comporte un mécanisme de coupe lié à un châssis reposant sur le sol au moyen de deux roues. Le groupeur à tapis, disposé derrière le mécanisme de coupe, est également supporté par le châssis. Le mécanisme de coupe est destiné à couper un produit sur pied, par exemple de l'herbe. Pour sa part, le groupeur permet avantageusement de regrouper, en un seul andain, le produit coupé lors d'au moins deux passages consécutifs de la faucheuse. En effet lors d'un premier passage, le groupeur de cette machine connue est pivoté vers le haut dans une position inactive. Le produit coupé par le mécanisme de coupe est donc déposé sur le sol dans le prolongement de la faucheuse. Lors d'un second passage, le groupeur est abaissé en position active. Dans ce cas, le produit coupé par le mécanisme de coupe est transporté, au moyen du groupeur à tapis, pour être déposé à coté de la faucheuse et sur l'andain du premier passage.

Sur cette machine connue, le groupeur se compose d'un premier tapis défilant suivant un axe longitudinal de la faucheuse et d'un deuxième tapis disposé transversalement à cette dernière. Le premier tapis est destiné à convoyer le fourrage provenant du mécanisme de coupe pour le déposer sur le deuxième tapis. Ce dernier transporte à son tour le fourrage pour le déposer sur le sol à coté de la faucheuse. A cet effet, le premier tapis est réalisé au moyen d'une bande sans fin enroulée autour de deux cylindres. L'un des cylindres, d'axe sensiblement horizontal, est disposé derrière le mécanisme de coupe. Le deuxième cylindre, identique au premier cylindre, est quant à lui disposé au-dessus du deuxième tapis.

Cette réalisation connue d'un dispositif de convoyage longitudinal comporte cependant un inconvénient. En effet afin de convoyer la totalité du produit coupé, le premier tapis est sensiblement aussi large que le mécanisme de coupe. Dans le cas de faucheuses à grande largeur de coupe, il est alors fréquent que la largeur du premier tapis soit supérieure à la distance séparant les deux cylindres le constituant. Une telle configuration rend difficile le guidage de la bande sans fin sur les cylindres. Lors du travail, celle-ci aura tendance à se translater le long de l'axe desdits cylindres et donc à venir frotter contre la structure du groupeur. Ce frottement réduit les performances du groupeur et il peut même provoquer un déchirement de la bande sans fin.

Le but de la présente invention vise à remédier à cet inconvénient de l'état de la technique.

A cet effet, la faucheuse selon la présente invention est caractérisée par le fait que ledit dispositif de convoyage longitudinal comporte plusieurs rouleaux, d'axes longitudinaux sensiblement perpendiculaires à une direction d'avance de ladite faucheuse, qui sont disposés l'un derrière l'autre suivant un même plan et qui sont entraînés en rotation autour desdits axes longitudinaux de manière à ce que leurs périphéries transportent le produit, coupé par le mécanisme de coupe, vers l'arrière de ladite faucheuse et le déposent sur le dispositif de convoyage transversal. Ainsi, ladite faucheuse ne présente pas l'inconvénient, décrit ci-dessus, lié à l'utilisation d'un tapis de grande largeur.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, en vue de coté, une faucheuse conforme à la présente invention,
- la **figure 2** représente, vue suivant la flèche II définie sur la figure 1, la faucheuse de la figure 1,
- la **figure 3** représente, vu en perspective suivant la flèche III définie sur la figure 2 et à une autre échelle, un exemple de réalisation du mécanisme de regroupement d'andains,
- **la figure 4** représente, vu en perspective suivant la flèche IV définie sur la figure 2 et à une autre échelle, le mécanisme de regroupement d'andains de la figure 3 en position inactive.

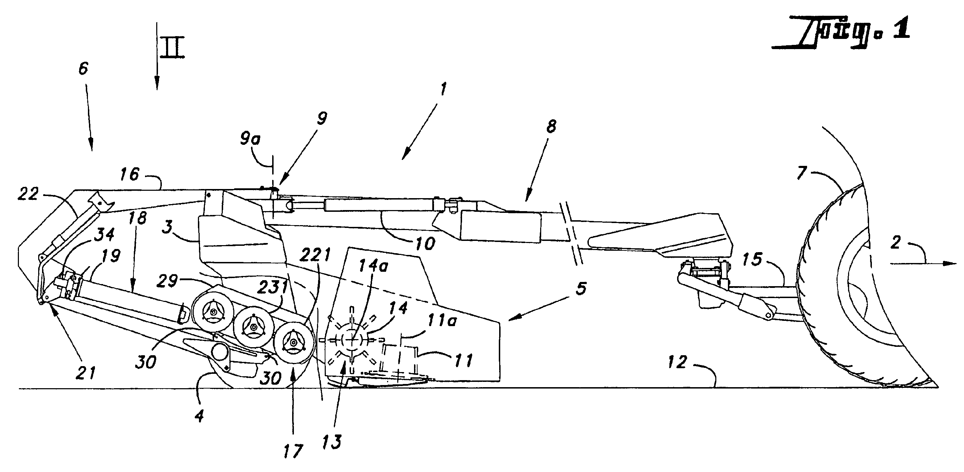

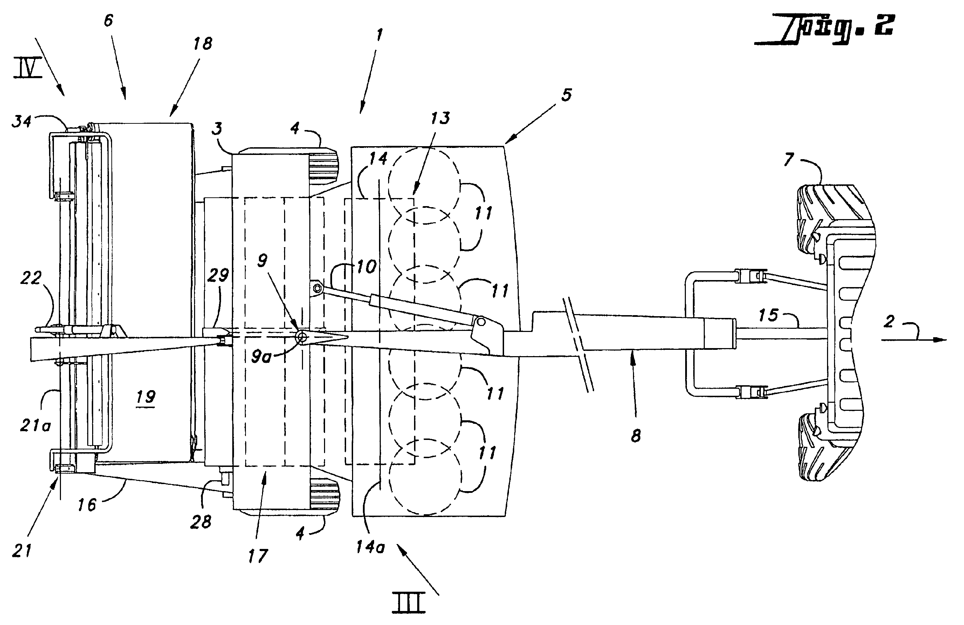

La faucheuse (1), représentée sur les figures 1 et 2, est tractée suivant une direction et un sens d'avance indiqué par la flèche (2). Dans la suite de la description, les notions suivantes "avant" et "arrière", "devant" et "derrière" sont définies par rapport au sens d'avance (2) et les notions "droite" et "gauche" sont définies en regardant ladite faucheuse (1) de l'arrière dans le sens d'avance (2).

D'une manière connue de l'homme de l'art, ladite faucheuse (1) comporte un châssis (3) roulant sur le sol au moyen de deux roues (4). Ledit châssis (3) supporte d'une part un mécanisme de coupe (5) et d'autre part un mécanisme de regroupement d'andains (6).

Dans l'exemple de réalisation représenté sur les figures 1 et 2, ledit châssis (3) est lié à l'arrière d'un véhicule tracteur (7) au moyen d'un timon (8). Ledit timon (8) est lié audit châssis (3) au moyen d'une articulation (9) d'axe (9a) dirigé vers le haut. Ladite articulation (9) permet avantageusement à ladite faucheuse (1) d'occuper, par rapport audit véhicule tracteur (7), une position de transport et au moins une position de travail.

Plus précisément à la lumière de la figure 2, ladite articulation (9) est située au moins sensiblement dans un plan vertical médian de ladite faucheuse (1). Ainsi d'une manière connue de l'homme de l'art, ladite faucheuse (1) peut être disposée dans le prolongement dudit véhicule tracteur (7), comme représentée sur la figure 2, afin de faciliter son transport sur route. En pivotant ledit timon (8) par rapport audit châssis (3) autour de ladite articulation (9), ladite faucheuse (1) peut également être déplacée vers la droite ou vers la gauche dudit véhicule tracteur (7). Ces deux positions, utilisées lors du travail, permettent avantageusement à ladite faucheuse (1) de travailler en va-et-vient. Dans l'exemple de réalisation représenté sur les figures 1 et 2, le pivotement dudit timon (8) et donc la mise en position de travail ou la mise en position de transport est commandé au moyen d'un vérin (10) lié d'une part audit châssis (3) et d'autre part audit timon (8).

Sur la figure 1, ledit châssis (3) a été représenté partiellement en coupe afin de rendre visible ledit mécanisme de regroupement d'andains (6).,Sur les figures 1 et 2, on notera également que l'intégralité de la longueur dudit timon (8) n'a pas été représentée.

D'une manière connue de l'homme de l'art, ledit mécanisme de coupe (5) est lié audit châssis (3) au moyen d'un dispositif de suspension. Lors du travail, tel que représenté sur la figure 1, ledit mécanisme de coupe (5) repose au moins partiellement sur le sol (12). Ledit dispositif de suspension permet avantageusement de reporter sur ledit châssis (3) au moins une partie du poids dudit mécanisme de coupe (5). De plus ledit dispositif de suspension permet audit mécanisme de coupe (5) de suivre les dénivellations dudit sol (12) indépendamment dudit châssis (3). Un tel dispositif de suspension est connu de l'homme de l'art, il ne sera donc pas décrit davantage et, pour des raisons de clarté, il n'a pas été représenté sur les figures.

Ledit mécanisme de coupe (5) comporte des organes de coupe (11), destinés à couper un produit sur pied, disposés suivant une ligne au moins sensiblement perpendiculaire à ladite direction d'avance (2). Chaque organe de coupe (11), représenté symboliquement sur la figure 2, est entraîné en rotation autour d'un axe respectif (11a) dirigé vers le haut.

Dans l'exemple de réalisation représenté sur les figures 1 et 2, ledit mécanisme de coupe (5) comporte également un dispositif de traitement (13) destiné à accélérer le séchage dudit produit coupé. D'une manière connue de l'homme de l'art, ledit dispositif de traitement (13) est réalisé au moyen d'un rotor de conditionnement (14) disposé derrière lesdits organes de coupe (11). Ledit rotor (14) est entraîné en rotation autour d'un axe (14a) sensiblement horizontal et perpendiculaire à ladite direction d'avance (2).

Les organes de coupe (11) et le dispositif de traitement (13) dudit mécanisme de coupe (5) sont entraînés en rotation, à partir d'une prise de force dudit véhicule tracteur (7), au moyen d'organes de transmission (15). Lesdits organes de transmission (15) sont connus de l'homme de l'art, ils ne seront donc pas décrits davantage.

Pour sa part, ledit mécanisme de regroupement d'andains (6) est destiné à regrouper, en un seul andain, le produit coupé lors d'au moins deux passages consécutifs de ladite faucheuse (1). A cet effet ledit mécanisme de regroupement d'andains (6) est disposé derrière ledit mécanisme de coupe (5). De plus, ledit mécanisme de regroupement d'andains (6) comporte une structure porteuse (16) supportant d'une part un dispositif de convoyage longitudinal (17) et d'autre part un dispositif de convoyage transversal (18). Ledit dispositif de convoyage longitudinal (17) permet de transporter, dans une direction opposée à ladite direction d'avance (2), le produit coupé par ledit mécanisme de coupe (5). Ledit dispositif de convoyage transversal (18) permet, quant à lui, de déplacer le produit coupé provenant dudit dispositif de convoyage longitudinal (17) suivant une direction avantageusement perpendiculaire à ladite direction d'avance (2).

Dans l'exemple de réalisation représenté sur les figures, ledit mécanisme de regroupement d'andains (6) fonctionne de la façon suivante.

Lors d'un premier passage de ladite faucheuse (1), ledit dispositif de convoyage transversal (18) est rendu inactif. Le produit, coupé par le mécanisme de coupe (5) et transporté vers l'arrière au moyen dudit dispositif de convoyage longitudinal (17), est ainsi déposé dans le prolongement de ladite faucheuse (1).

Lors d'un deuxième passage de ladite faucheuse (1), ledit dispositif de convoyage transversal (18) est activé. De ce fait le produit, coupé par le mécanisme de coupe (5) puis transporté vers l'arrière au moyen dudit dispositif de convoyage longitudinal (17) et enfin déplacé latéralement par ledit dispositif de convoyage transversal (18), est ainsi déposé à coté de ladite faucheuse (1) et sur l'andain dudit premier passage.

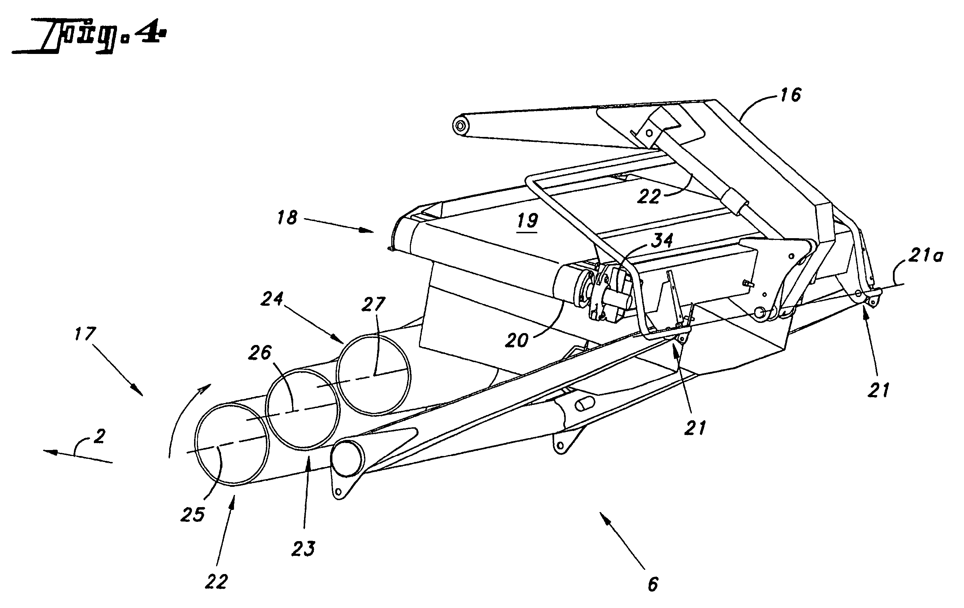

Pour ce faire, dans l'exemple de réalisation représenté sur les figures, ledit dispositif de convoyage transversal (18) est lié à ladite structure porteuse (16) au moyen d'une articulation (21) d'axe (21a) sensiblement horizontal et perpendiculaire à ladite direction d'avance (2). Ledit dispositif de convoyage transversal (18) peut ainsi occuper au moins une position sensiblement horizontale (figure 1, 2, 3), et au moins une position escamotée (figure 4). De plus, ledit dispositif de convoyage transversal (18) comporte une bande sans fin (19) enroulée autour de deux cylindres (20). Lesdits cylindres (20) sont avantageusement orientés suivant ladite direction d'avance (2). Au moins l'un desdits cylindres (20) est entraîné en rotation autour de son axe longitudinal au moyen d'un moteur (34).

En position sensiblement horizontale (figure 1, 2, 3), le produit coupé provenant dudit dispositif de convoyage longitudinal (17) tombe sur le dessus de ladite bande sans fin (19). Par conséquent, ledit dispositif de convoyage transversal (18) est actif. Par contre en position escamotée (figure 4), ledit dispositif de convoyage transversal (18) est pivoté vers le haut autour de ladite articulation (21). Le produit coupé provenant dudit dispositif de convoyage longitudinal (17) passe sous ladite bande sans fin (19) et tombe directement sur le sol. Ledit dispositif de convoyage transversal (18) est donc inactif.

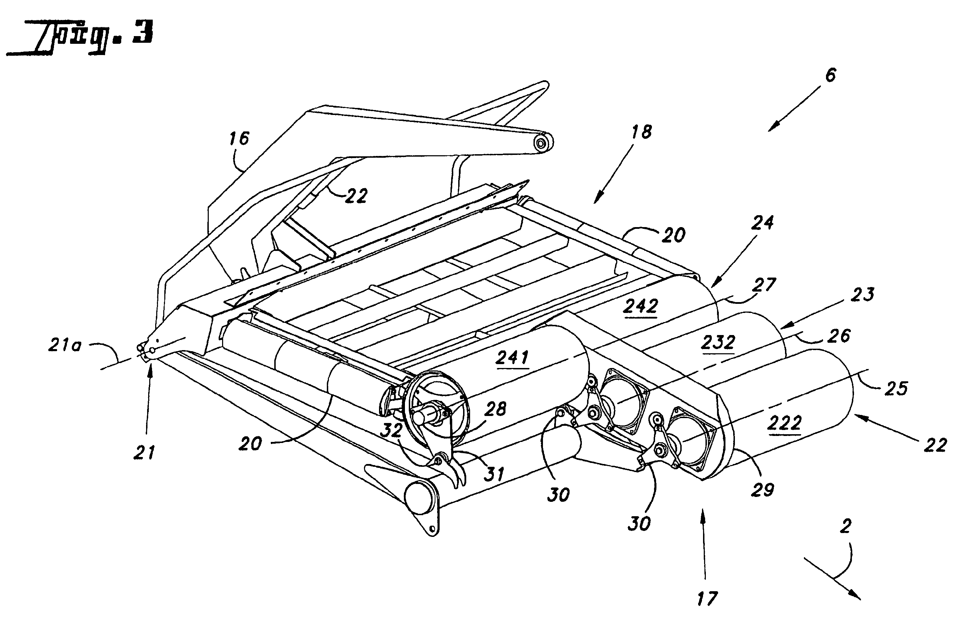

Le pivotement dudit dispositif de convoyage transversal (18) autour de ladite articulation (21) est avantageusement commandé au moyen d'un vérin (22). Cette réalisation d'un dispositif de convoyage transversal (18) étant connue de l'homme de l'art, elle ne sera donc pas détaillée davantage. On notera que ladite bande sans fm (19) n'a pas été représentée sur la figure 3 afin de rendre visible lesdits cylindres (20).

Pour sa part ledit dispositif de convoyage longitudinal (17) comporte, selon une caractéristique importante de la présente invention, au moins un rouleau d'axe longitudinal sensiblement perpendiculaire à ladite direction d'avance (2) de ladite faucheuse (1). Ledit rouleau est en plus animé d'un mouvement de rotation autour dudit axe longitudinal afin de transporter ledit produit coupé.

Dans l'exemple de réalisation représenté sur les figures, ledit dispositif de convoyage longitudinal (17) comporte trois rouleaux (22, 23, 24) disposés, l'un derrière l'autre, entre ledit mécanisme de coupe (5) et ledit dispositif de convoyage transversal (18). Chaque rouleau (22, 23, 24) comporte un axe longitudinal (25, 26, 27) respectif sensiblement horizontal et sensiblement perpendiculaire à ladite direction d'avance (2).

De manière préférentielle, lesdits axes longitudinaux (25, 26, 27) sont parallèles entre eux et ils sont compris dans un même plan. A la lumière de la figure 1, l'avant dudit plan est avantageusement dirigé vers le sol. En effet ledit dispositif de convoyage transversal (18) est situé à une distance relativement importante du sol afin de pouvoir projeter le produit coupé loin sur le coté lors du second passage de ladite faucheuse (1). Ledit dispositif de convoyage longitudinal (17) a donc également pour rôle d'élever le fourrage dudit mécanisme de coupe (5) jusqu'audit dispositif de convoyage transversal (18).

Afin de transporter le produit coupé, chaque rouleau (22, 23, 24) est animé d'un mouvement de rotation autour dudit axe longitudinal respectif (25, 26, 27). Dans l'exemple de réalisation représenté sur les figures, l'un desdits rouleaux (24) est entraîné en rotation au moyen d'un moteur hydraulique (28). Ce mouvement de rotation est ensuite transmis aux autres rouleaux (22, 23) au moyen d'éléments de transmission (non représentés).

Dans l'exemple de réalisation représenté sur les figures et plus particulièrement à la figure 3, chaque rouleau (22, 23, 24) se compose de deux demi-rouleaux (221, 222 ; 231, 232 ; 241, 242) disposés de part et d'autre d'un plan vertical médian de ladite faucheuse (1). Lesdits demi-rouleaux (221, 222 ; 231, 232 ; 241, 242) ont un axe longitudinal respectif au moins sensiblement confondu avec ledit axe longitudinal respectif (25, 26, 27). Pour des raisons de clarté, les deux demi-rouleaux (221 ; 231) situés devant et à droite dudit dispositif de convoyage longitudinal (17) n'ont pas été représentés sur la figure 3.

Lesdits demi-rouleaux (221, 222 ; 231, 232 ; 241, 242) sont liés à ladite structure porteuse (16) au moyen d'un carter (29) disposé au moins sensiblement dans ledit plan vertical médian. Ledit carter (29) assure d'une part le guidage des demi-rouleaux (221, 222 ; 231, 232 ; 241, 242) et d'autre part la transmission dudit mouvement de rotation. A cet effet, ledit carter (29) contient lesdits éléments de transmission (non représentés), réalisés par exemple sous la forme d'une cascade de pignons, d'une courroie ou encore d'une chaîne. D'une manière avantageuse, ledit carter (29) est lié à ladite structure porteuse (16) au moyen de deux articulations (30) munies d'éléments amortisseurs, par exemple des tampons en caoutchouc.

A la lumière de la figure 3, ledit moteur hydraulique (28) est également lié à ladite structure porteuse (16) au moyen d'un support (31). La liaison dudit support (31) avec ladite structure porteuse (16) est également réalisée au moyen d'une articulation (32) munie d'éléments amortisseurs. Ledit support (31) contribue également à une bonne stabilité dudit dispositif de convoyage longitudinal (17).

D'une manière particulièrement avantageuse, ladite structure porteuse (16) est liée de manière démontable audit châssis (3). Ledit mécanisme de regroupement d'andains (6) peut ainsi constituer un kit que l'on peut aisément ajouter ou enlever à une faucheuse (1). Ledit kit peut également contenir une pompe hydraulique (non représentée) destinée à être liée à ladite faucheuse (1) et entraînée par lesdits organes de transmission (15). Ladite pompe hydraulique permettra d'entraîner ledit moteur hydraulique (28) dudit dispositif de convoyage longitudinal (17) et ledit moteur (34) destiné à mouvoir ladite bande sans fin (19) dudit dispositif de convoyage transversal (18).

La faucheuse qui vient d'être décrite, n'est qu'un exemple de réalisation qui ne saurait en aucun cas limiter le domaine de protection défini par les revendications suivantes.

En effet, la présente invention concerne également les faucheuses (1) ne comportant pas de dispositif de conditionnement (13) ou comportant un dispositif de conditionnement (13) différent (constitué par exemple de deux rouleaux contrarotatifs).

De même, ledit dispositif de convoyage longitudinal (17) peut comporter un nombre différent de rouleaux (22, 23, 24).

Dans un autre exemple de réalisation non représenté, chaque rouleau (22, 23, 24) est réalisé en un seul tenant. Ledit carter (29) est par conséquent disposé à une extrémité desdits rouleaux (22, 23, 24). De manière préférentielle, l'autre extrémité desdits rouleaux (22, 23, 24) est soutenue par un support. Dans cet exemple de réalisation, ledit moteur hydraulique (28) entraîne directement un élément de transmission présent dans ledit carter (29).

## Revendications

1. Faucheuse comportant :
- un châssis (3),
- un mécanisme de coupe (5) supporté par ledit châssis (3), et
- un mécanisme de regroupement d'andains (6) comportant un dispositif de convoyage longitudinal (17) et un dispositif de convoyage transversal (18),
***caractérisée par le fait que*** ledit dispositif de convoyage longitudinal (17) comporte plusieurs rouleaux (22, 23, 24), d'axes longitudinaux (25, 26, 27) sensiblement perpendiculaires à une direction d'avance (2) de ladite faucheuse (1), qui sont disposés l'un derrière l'autre suivant un même plan et qui sont entraînés en rotation autour desdits axes longitudinaux (25, 26, 27) de manière à ce leurs surfaces transportent un produit, coupé par le mécanisme de coupe (5), vers l'arrière de ladite faucheuse (1) et le déposent sur le dispositif de convoyage transversal (18).

2. Faucheuse selon la revendication 1, ***caractérisée par le fait que*** ledit dispositif de convoyage longitudinal (17) comporte trois rouleaux (22, 23, 24).

3. Faucheuse selon la revendication 2, ***caractérisée par le fait que*** lesdits rouleaux (22, 23, 24) sont sensiblement identiques.

4. Faucheuse selon la revendication 1, ***caractérisée par le fait que*** l'avant dudit plan est dirigé vers le sol afin d'élever le produit coupé par ledit mécanisme de coupe (5) jusqu'audit dispositif de convoyage transversal (18).

5. Faucheuse selon l'une quelconque des revendications 1 à 4, ***caractérisée par le fait que*** le mouvement de rotation est transmis entre lesdits rouleaux (22, 23, 24) au moyen d'éléments de transmission.

6. Faucheuse selon l'une quelconque des revendications 1 à 5, ***caractérisée par le fait que*** chaque rouleau (22, 23, 24) se compose de deux demi-rouleaux (221, 222 ; 231, 232 ; 241, 242).

7. Faucheuse selon la revendication 6, ***caractérisée par le fait que*** lesdits demi-rouleaux (221, 222 ; 231, 232 ; 241, 242) sont disposés de part et d'autre d'un plan vertical médian de ladite faucheuse (1).

8. Faucheuse selon la revendication 6 ou 7, ***caractérisée par le fait que*** lesdits demi-rouleaux (221, 222 ; 231, 232 ; 241, 242) sont liés à un carter (29) disposé au moins sensiblement dans un plan vertical médian de ladite faucheuse (1).

9. Faucheuse selon l'une quelconque des revendications 6 à 8, ***caractérisée par le fait que*** l'un desdits demi-rouleaux (221, 222 ; 231, 232 ; 241, 242) est entraîné en rotation au moyen d'un moteur (28).

10. Faucheuse selon l'une quelconque des revendications 1 à 5, ***caractérisée par le fait que*** l'une des extrémités desdits rouleaux (22, 23, 24) est liée à un carter (29).

11. Faucheuse selon la revendication 10 prise en combinaison avec la revendication 5, ***caractérisée par le fait que*** lesdits éléments de transmission sont disposés à l'intérieur dudit carter (29).

12. Faucheuse selon la revendication 10 ou 11, ***caractérisée par le fait qu*'**un moteur (28) entraînant lesdits rouleaux (22, 23, 24) est lié audit carter (29).

13. Faucheuse selon l'une quelconque des revendications 10 à 12, ***caractérisée par le fait que*** l'autre extrémité desdits rouleaux (22, 23, 24) est soutenue par un support.

14. Faucheuse selon l'une quelconque des revendications 1 à 13, ***caractérisée par le fait que*** ladite faucheuse est une faucheuse traînée (1).

## Patentansprüche

1. Mäher mit
- einem Gestell (3),
- einem Schneidmechanismus (5), der von dem Gestell (3) getragen wird, und
- einem Schwadlegemechanismus (6), der eine Längsfördereinrichtung (17) und eine Querfördereinrichtung (18) umfasst,
***dadurch gekennzeichnet,* dass** die Längsfördereinrichtung (17) mehrere Rollen (22, 23, 24) mit im Wesentlichen auf eine Vorschubrichtung (2) des Mähers (1) senkrechten Längsachsen (25, 26, 27) umfasst, die hintereinander entlang einer selben Ebene angeordnet sind und in Drehung um die Längsachsen (25, 26, 27) angetrieben werden, so dass ihre Flächen ein vom Schneidmechanismus (5) gemähtes Produkt zur hinteren Seite des Mähers (1) befördern und es auf der Querfördereinrichtung (18) ablegen.

2. Mäher nach Anspruch 1, ***dadurch gekennzeichnet,* dass** die Längsfördereinrichtung (17) drei Rollen (22, 23, 24) umfasst.

3. Mäher nach Anspruch 2, ***dadurch gekennzeichnet,* dass** die Rollen (22, 23, 24) im Wesentlichen identisch sind.

4. Mäher nach Anspruch 1, ***dadurch gekennzeichnet,* dass** der vordere Bereich der Ebene zum Boden gerichtet ist, um das vom Schneidmechanismus (5) gemähte Produkt bis zur Querfördereinrichtung (18) hochzuheben.

5. Mäher nach irgend einem der Ansprüche 1 bis 4, ***dadurch gekennzeichnet,* dass** die Drehbewegung zwischen den Rollen (22, 23, 24) mit Hilfe von Übertragungselementen übertragen wird.

6. Mäher nach irgend einem der Ansprüche 1 bis 5, ***dadurch gekennzeichnet,* dass** sich jede Rolle (22, 23, 24) aus zwei halben Rollen (221, 222; 231, 232; 241, 242) zusammensetzt.

7. Mäher nach Anspruch 6, ***dadurch gekennzeichnet,* dass** die halben Rollen (221, 222; 231, 232; 241, 242) beiderseits einer vertikalen Mittelebene des Mähers (1) angeordnet sind.

8. Mäher nach Anspruch 6 oder 7, ***dadurch gekennzeichnet,* dass** die halben Rollen (221, 222; 231, 232; 241, 242) mit einem Gehäuse (29) verbunden sind, das im Wesentlichen in einer vertikalen Mittelebene des Mähers (1) angeordnet ist.

9. Mäher nach irgend einem der Ansprüche 6 bis 8, ***dadurch gekennzeichnet,* dass** eine der halben Rollen (221, 222; 231, 232; 241, 242) mittels eines Motors (28) in Drehung versetzt wird.

10. Mäher nach irgend einem der Ansprüche 1 bis 5, ***dadurch gekennzeichnet,* dass** eines der Enden der Rollen (22, 23, 24) mit einem Gehäuse (29) verbunden ist.

11. Mäher nach Anspruch 10 in Kombination mit Anspruch 5, ***dadurch gekennzeichnet,* dass** die Übertragungselemente im Inneren des Gehäuses (29) angeordnet sind.

12. Mäher nach Anspruch 10 oder 11, ***dadurch gekennzeichnet,* dass** ein Motor (28), der die Rollen (22, 23, 24) antreibt, mit dem Gehäuse (29) verbunden ist.

13. Mäher nach irgend einem der Ansprüche 10 bis 12, ***dadurch gekennzeichnet,* dass** das andere Ende der Rollen (22, 23, 24) von einer Stütze gehalten wird.

14. Mäher nach irgend einem der Ansprüche 1 bis 13, ***dadurch gekennzeichnet,* dass** der Mäher ein gezogener Mäher (1) ist.

## Claims

1. Mower comprising:
- a frame (3),
- a cutting mechanism (5) supported by the said frame (3), and
- a mechanism (6) for grouping windrows comprising a longitudinal conveying device (17) and a transverse conveying device (18),
***characterized in* that** the said longitudinal conveying device (17) comprises several rollers (22, 23, 24) with longitudinal axes (25, 26, 27) which are at least substantially perpendicular to a direction of forward travel (2) of the said mower (1), which are arranged one behind the other in a same plane and which are driven in rotation about the said longitudinal axes (25, 26, 27) so that their surfaces transport a product, cut by the cutting mechanism (5), toward the rear of the said mower (1) and lay it down on the transverse conveying device (18).

2. Mower as claimed in claim 1, ***characterized in* that** the said longitudinal conveying device (17) comprises three rollers (22, 23, 24).

3. Mower as claimed in claim 2, ***characterized in* that** the said rollers (22, 23, 24) are substantially identical.

4. Mower as claimed in claim 1, ***characterized in* that** the front of the said plane is directed toward the ground so as to lift the product cut by the said cutting mechanism (5) as far as the said transverse conveying device (18).

5. Mower as claimed in any one of claims 1 to 4, ***characterized in* that** the rotational movement is transmitted between the said rollers (22, 23, 24) by means of transmission elements.

6. Mower as claimed in any one of claims 1 to 5, ***characterized in* that** each roller (22, 23, 24) is made up of two half-rollers (221, 222; 231, 232; 241, 242).

7. Mower as claimed in claim 6, ***characterized in* that** the said half-rollers (221, 222; 231, 232; 241, 242) are arranged on each side of a vertical mid-plane of the said mower (1).

8. Mower as claimed in claim 6 or 7, ***characterized in* that** the said half-rollers (221, 222; 231, 232; 241, 242) are connected to a casing (29) arranged at least substantially in a vertical mid-plane of the said mower (1).

9. Mower as claimed in any one of claims 6 to 8, ***characterized in* that** one of the said half-rollers (221, 222; 231, 232; 241, 242) is driven in rotation by means of a motor (28).

10. Mower as claimed in any one of claims 1 to 5, ***characterized in* that** one of the ends of the said rollers (22, 23, 24) is connected to a casing (29).

11. Mower as claimed in claim 10 taken in combination with claim 5, ***characterized in* that** the said transmission elements are arranged inside said casing (29).

12. Mower as claimed in claim 10 or 11, ***characterized in* that** a motor (28) driving the said rollers (22, 23, 24) is connected to the said casing (29).

13. Mower as claimed in any one of claims 10 to 12, ***characterized in* that** the other end of the said rollers (22, 23, 24) is supported by a support.

14. Mower as claimed in any one of claims 1 to 13, ***characterized in* that** the said mower is a trailed mower (1).
